# EUROPÄISCHE PATENTSCHRIFT

(11) **EP 3 308 066 B1**
(45) Veröffentlichungstag und Bekanntmachung des Hinweises auf die Patenterteilung: **10.03.2021**
(21) Anmeldenummer: 16715559.7
(22) Anmeldetag: 12.04.2016
(51) Int. Cl.: F16L 33/10, F16L 23/00, F16L 23/08

(54) **SCHELLE MIT SCHELLENBAND UND VORPOSITIONIERER**
CLAMP HAVING A CLAMP BAND AND A PRE-POSITIONER
BRIDE POURVUE D'UNE BANDE DE BRIDE ET D'UN DISPOSITIF DE PRÉ-POSITIONNEMENT

(30) Priorität: 15.06.2015 DE 102015109470
(43) Veröffentlichungstag der Anmeldung: 18.04.2018
(73) Patentinhaber: NORMA Germany GmbH, 63477 Maintal (DE)
(72) Erfinder: VELECKY, Radoslav, 69301 Hustopece (CZ); LUKUVKA, Simon, 79401 Krnov (CZ); GHIRARDI, Fabio, 63450 Hanau (DE)
(74) Vertreter: Patentanwälte Olbricht Buchhold Keulertz
(86) Internationale Anmeldenummer: PCT/EP2016/057968
(87) Internationale Veröffentlichungsnummer: WO 2016/202478

(56) Entgegenhaltungen:
- EP-A2- 1 912 008
- WO-A1-99/09344
- DE-U1-202013 001 224

## Beschreibung

Die Erfindung betrifft eine Schelle mit einem Schellenband und einem Vorpositionierer mit den Merkmalen des Oberbegriffs des Anspruchs 1.

Schellen, insbesondere Profilschellen oder Spannschellen dienen zur Festlegung von Rohr- und Schlauchenden. Über die Schelle wird eine radiale Haltekraft eingebracht, die im Falle von Profilschellen um eine axiale Haltekraft ergänzt wird. Profilschellen werden dabei in der Regel zum Verbinden von zwei Leitungen verwendet, die an ihren Enden Verbindungsflansche aufweisen. Die Profilschelle umgreift dabei die Verbindungsflansche an ihren einander abgewandten Stirnseiten und drückt diese zusammen. Dafür hat die Profilschelle in der Regel ein Schellenband mit V-förmigen oder trapezförmigen Profil.

Als Spannschelle ausgebildete Schellen weisen in der Regel ein flaches Schellenband auf, das flächig auf einem Leitungsende aufliegen kann. Mit derartigen Schellen werden Leitungsenden beispielsweise an Rohrstutzen und ähnlichem festgelegt.

Um die Montage insbesondere bei beengten Raumverhältnissen zu vereinfachen, ist es bekannt, die Schelle mit Hilfe eines Vorpositionierers bereits vor dem Spannen an der Leitung festzulegen. In DE 10 2008 047 038 A1 wird beispielsweise vorgeschlagen, den Vorpositionierer mit einer radial nach innen ragenden, hakenartigen Spitze zu versehen, der in die Leitung eingedrückt wird und so die Schelle bereits im ungespannten Zustand an der Leitung hält. Diese Ausgestaltung führt jedoch zu einer Beschädigung der Leitung und kann bei Profilschellen, die eine radiale Beweglichkeit der Schelle zum Übergreifen der Verbindungsflansche erfordern, nicht eingesetzt werden.

In DE 20 2013 001 224 U1 wird nun eine Profilschelle mit einem Vorpositionierer vorgeschlagen, der ein Trägerband aufweist, welches sich mit einem teilkreisförmigen Bereich über mehr als 180 Grad erstreckt. Von diesem teilkreisförmigen Bereich gehen Befestigungsbereiche in axialer Richtung aus, die den teilkreisförmigen Bereich mit einem weiteren teilkreisförmigen Bereich verbinden, der um eine Umfangsseite des Schellenbandes gelegt ist. Darüber wird der Vorpositionierer am Schellenband befestigt.

Die Fertigung eines derartigen Vorpositionierers mit zwei teilkreisförmigen Bereichen ist relativ aufwendig. Darüber hinaus besteht die Gefahr, dass sich ein derartiger Vorpositionierer unbeabsichtigt von der Schelle löst.

Der Erfindung liegt nun die Aufgabe zugrunde, die Nachteile des Stands der Technik zu beseitigen und eine Schelle mit einem Vorpositionierer anzugeben, die universell einsetzbar ist und mit hoher Sicherheit vorpositioniert werden kann. Darüber hinaus soll sie mit möglichst geringem Aufwand hergestellt und damit kostengünstig produziert werden können.

Erfindungsgemäß wird diese Aufgabe durch eine Schelle mit den Merkmalen des Anspruchs 1 gelöst. Vorteilhafte Ausgestaltungen finden sich in den Unteransprüchen.

Bei einer Schelle mit einem Schellenband und einem Vorpositionierer, wobei der Vorpositionierer als Trägerband ausgebildet ist, der einen teilkreisförmigen Bereich aufweist, ist erfindungsgemäß vorgesehen, dass das Trägerband des Vorpositionierers an seinen Enden jeweils einen gegenüber dem teilkreisförmigen Bereich abgewinkelten Befestigungsbereich aufweist, wobei die Befestigungsbereiche an einer gleichen Seite des Schellenbandes befestigt sind.

Der Vorpositionierer bzw. das Trägerband wird damit also fest und somit unverlierbar am Schellenband gehalten, wobei die Festlegung an einer Seite des Schellenbandes, also an der gleichen Flanke oder einer Umfangsseite, eine einfache Herstellung erlaubt. Der Vorpositionierer ermöglicht dabei ein Befestigen der Schelle an einer Leitung mit gleichzeitig weiterhin vorhandenem radialem Spiel aufgrund der Flexibilität der abgewinkelten Befestigungsbereiche. Dafür ist der teilkreisförmige Bereich radial innerhalb des Schellenbandes angeordnet, weist also einen geringeren Durchmesser auf, der im Wesentlichen dem Durchmesser entspricht, den das Schellenband im gespannten Zustand einnimmt. Das Trägerband erstreckt sich beispielsweise über eine Winkel von 180° oder mehr.

Dabei ist besonders bevorzugt, dass die Befestigungsbereiche mit dem Schellenband stoffschlüssig verbunden sind, insbesondere verschweißt sind. Dies stellt eine sehr einfach herzustellende, sichere Befestigung dar. Ein Verlieren bzw. Lösen des Vorpositionierers vom Schellenband wird damit zuverlässig verhindert.

In einer bevorzugten Ausgestaltung ist der teilkreisförmige Bereich radial innerhalb des Schellenbandes und axial gegenüber dem Schellenverband versetzt, wobei der Befestigungsbereich einen in einer Ebene mit dem teilkreisförmigen Bereich liegenden Radialabschnitt und einen axial verlaufenden Axialabschnitt umfasst. Der Radialabschnitt ermöglicht durch elastische Verformung dabei eine relativ große radiale Relativbewegung zwischen Vorpositionierer und Schellenband, ohne dass die Schelle sich von der Leitung lösen kann. Auch ist dadurch ein kurzzeitiges Aufweiten des teilkreisförmigen Bereichs zum Umgreifen der Leitung möglich, wobei dabei bevorzugt ist, dass das Trägerband anschließend mit einer gewissen Vorspannung an der Leitung anliegt und dementsprechend nicht nur über Formschluss, sondern auch über Kraftschluss gehalten ist. Die axiale Versetzung von Schellenband und Trägerband ermöglicht dabei einen universellen Einsatz dieser Schelle, wobei die Schelle beispielsweise auch in einem Bereich der Leitung anliegen kann, die einen anderen Durchmesser aufweist als der Bereich, an dem der Vorpositionierer angreift. Dies ist beispielsweise dann der Fall, wenn die Schelle auf einem Verbindungsflansch der Leitung einwirken soll.

Vorzugsweise ist der Radialabschnitt gegenüber dem teilkreisförmigen Bereich um mehr als 90 Grad nach außen gebogen. Damit wird eine relativ große Flexibilität erreicht und gleichzeitig ein Aufweiten des teilkreisförmigen Bereichs ermöglicht.

Um eine relativ hohe Stabilität in Axialrichtung zu erreichen, also eine mögliche Bewegung zwischen Vorpositionierer und Schellenband in Axialrichtung klein zu halten, ist vorzugsweise der Axialabschnitt breiter als der Radialabschnitt ausgebildet. Während der Radialabschnitt elastisch verformbar sein sollte, ist dies in Axialrichtung in der Regel nicht erforderlich. Durch eine breite Ausgestaltung des Axialabschnitts wird dem Rechnung getragen und eine in Axialrichtung stabile Vorpositionierung der Schelle erreicht.

Mit besonderem Vorteil ist der Vorpositionierer, insbesondere der teilkreisförmige Bereich und die Radialabschnitte, federelastisch verformbar. Zum Befestigen der Schelle kann der Vorpositionierer dann kurzzeitig aufgeweitet werden, wobei sich das Trägerband mit dem teilkreisförmigen Bereich anschließend an eine Außenseite der Leitung anlegt. Durch die federelastische Ausbildung, die Beispielsweise durch Verwendung eines Metallblechs für den Vorpositionierer erreicht werden kann, kann die Schelle problemlos wiederverwendet werden. Gleichzeitig kann neben einem Formschluss auch ein Reib-bzw. Kraftschluss zwischen Vorpositionierer und Leitung hergestellt werden. Somit ergibt sich ein sicherer Halt der Schelle.

In einer bevorzugten Ausgestaltung ist die Schelle als Spannschelle ausgebildet, wobei an Enden des Schellenbandes jeweils eine Spannbacke ausgebildet ist, die über ein Spannmittel miteinander verbunden sind. Als Spannmittel kann dabei beispielsweise eine Schraube mit einer Gegenmutter verwendet werden. Eine derartige Schelle ist vielfältig einsetzbar und ist in der Lage, ausreichend hohe radial nach innen gerichtete Haltekräfte zu erzeugen.

In einer weiteren bevorzugten Ausgestaltung ist die Schelle als Profilschelle ausgebildet, wobei das Schellenband zwei radial nach innen geneigte Flanken aufweist. Profilschellen können insbesondere zur Verbindung von Leitungen eingesetzt werden und neben Radialkräften auch Axialkräfte einbringen und so Leitungsenden aneinander drücken.

Bevorzugterweise beträgt ein offener Winkelbereich des Trägerbandes bei ungespannter Schelle zwischen 45 Grad und 90 Grad. Das Trägerband ist dann ausreichend flexibel, um soweit aufgeweitet werden zu können, dass es um eine Leitung herum gelegt werden kann. Gleichzeitig wird nach dem Herumlegen ein sicherer Formschluss erreicht, da die Leitung nicht durch den offenen Winkelbereich herausgenommen werden kann, ohne das Trägerband erneut aufzuweiten.

Dabei ist besonders bevorzugt, dass der offene Winkelbereich des Trägerbandes in Umfangsrichtung gegenüber einem zwischen den Spannbacken ausgebildeten Spannbereich des Schellenbandes versetzt ist. Die Befestigungsbereiche des Vorpositionierers befinden sich dadurch entfernt von einem möglicherweise vorhandenen Spannmittel und stehen damit einer Bedienung nicht im Wege. Damit ergibt sich eine relativ gleichmäßige Belastung der Leitung.

Dabei ist besonders bevorzugt, dass die Befestigungsabschnitte in Umfangsrichtung um weniger als 180 Grad versetzt zueinander am Schellenband befestigt sind. Gleichzeitig kann aber vorgesehen sein, dass sie mehr als 90 Grad, insbesondere mehr als 120 Grad gegeneinander versetzt sind. Dadurch ergibt sich zum einen eine ausreichende Flexibilität der Befestigungsabschnitte in Radialrichtung, zum anderen kann der teilkreisförmige Bereich mit relativ großem Durchmesser hergestellt werden. Insbesondere setzt er damit einem Spannen der Schellen nur einen geringen Widerstand entgegen.

Die Erfindung wird im Folgenden anhand eines bevorzugten Ausführungsbeispiels in Verbindung mit der Zeichnung näher beschrieben. Hierin zeigt:

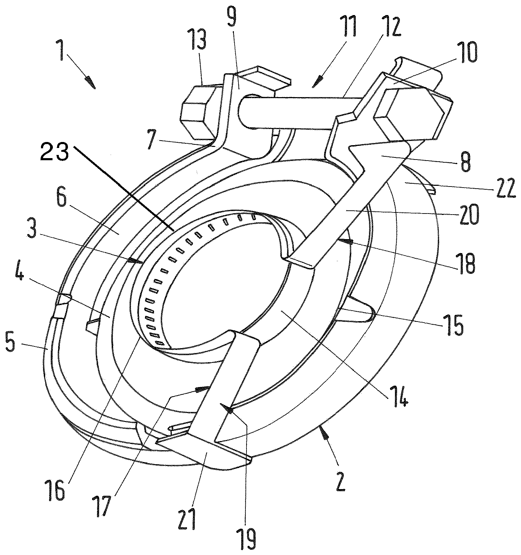

- Fig. 1: eine Schelle mit Vorpositionierer in räumlicher Darstellung.

Figur 1 zeigt eine Schelle 1 mit einem Schellenband 2 und einem Vorpositionierer 3. Die Schelle 1 ist als Profilschelle ausgebildet, wobei das Schellenband 2 radial nach innen geneigte Flanken 4, 5 aufweist, die von einer in Umfangsrichtung verlaufenden Basis 6 ausgehen. An Enden 7, 8 des Schellenbands 2 sind Spannbacken 9, 10 ausgebildet, die über ein Spannmittel 11 miteinander verbunden sind. Das Spannmittel umfasst einen Schraubbolzen 12 und eine Kontermutter 13.

Durch Betätigen des Spannmittels 11 werden die Spannbacken 9, 10 aufeinander zu bewegt, wodurch das Schellenband 2 gespannt wird und sich ein Durchmesser des Schellenbands 2 verringert.

Die Schelle 1 ist über den Vorpositionierer 3 an einer schematisch dargestellten Leitung 14 vorpositioniert, wobei die Leitung 14 einen radial nach außen ragenden Verbindungsflansch 15 aufweist, der vom Schellenband 2 umgriffen werden soll.

Der Vorpositionierer 3 weist einen teilkreisförmigen Bereich 16 auf, mit dem er um die Leitung 14 herumgelegt ist. Vom teilkreisförmigen Bereich 16 gehen symmetrisch zwei Befestigungsbereiche 17, 18 ab, die einen Radialabschnitt 19, 20 und einen Axialabschnitt 21, 22 umfassen. Der teilkreisförmige Bereich 16 mit den Befestigungsbereichen 17, 18 ist dabei als Trägerband ausgebildet und durch entsprechende Verformung des Bandes hergestellt. Die Radialabschnitte liegen dabei in einer Ebene mit dem teilkreisförmigen Bereich, während die Axialabschnitte senkrecht zu dieser Ebene verlaufen. Dementsprechend sorgen die Axialabschnitte 21, 22 dafür, dass der teilkreisförmige Bereich 16 axial beabstandet gegenüber dem Schellenband 2 gehalten wird.

Die Axialabschnitte 21, 22 des Trägerbands 23 sind mit der Basis 6 des Schellenbands 2 verschweißt. Alternativ könnte vorgesehen sein, die Befestigungsbereiche 17, 18 mit einer der Flanken 4, 5 stoffschlüssig zu verbinden.

Die Befestigungspositionen der Axialabschnitte 21, 22 am Schellenband 2 liegen in Umfangsrichtung versetzt zueinander, und zwar insbesondere in einem Winkel zwischen 90 und 180 Grad. Dementsprechend sind die Radialabschnitte 19, 20 um mehr als 90 Grad gegenüber dem teilkreisförmigen Bereich 16 geneigt. Dadurch wird eine relativ hohe Flexibilität in radialer Richtung erreicht, während durch eine hohe Breite der Axialabschnitte 21, 22 eine relativ hohe axiale Stabilität erhalten wird.

Ein offener Winkelbereich des Trägerbands 23 liegt außerhalb eines Spannbereiches des Schellenbandes, der durch das Spannmittel 11 überbrückt wird. Eine Überlastung der Leitungen wird so gering gehalten.

Die Erfindung ist nicht auf das gezeigte Ausführungsbeispiel beschränkt, sondern in vielfältiger Weise abwandelbar. So kann die Schelle beispielsweise auch als einfache Spannschelle mit einem flachen Schellenband ausgebildet sein. Ferner kann der Vorpositionierer aus dem gleichen Material wie das Schellenband hergestellt werden, es ist aber auch möglich, unterschiedliche Materialien zu verwenden.

### Bezugszeichenliste

- 1: Schelle
- 2: Schellenband
- 3: Vorpositionierer
- 4: Flanke
- 5: Flanke
- 6: Basis
- 7: Ende
- 8: Ende
- 9: Spannbacke
- 10: Spannbacke
- 11: Spannmittel
- 12: Schraubbolzen
- 13: Kontermutter
- 14: Leitung
- 15: Verbindungsflansch
- 16: teilkreisförmiger Bereich
- 17: Befestigungsbereich
- 18: Befestigungsbereich
- 19: Radialabschnitt
- 20: Radialabschnitt
- 21: Axialabschnitt
- 22: Axialabschnitt
- 23: Trägerband

## Patentansprüche

1. Schelle mit einem Schellenband (2) und einem Vorpositionierer (3), wobei der Vorpositionierer (3) als Trägerband (23) ausgebildet ist, der einen teilkreisförmigen Bereich (16) aufweist, wobei das Trägerband (23) an seinen Enden jeweils einen gegenüber dem teilkreisförmigen Bereich abgewinkelten Befestigungsbereich (17, 18) aufweist, **dadurch gekennzeichnet, dass** die Befestigungsbereiche (17, 18) an einer gleichen Flanke oder einer gleichen Umfangsseite des Schellenbandes (2) befestigt sind.

2. Schelle nach Anspruch 1, **dadurch gekennzeichnet, dass** die Befestigungsbereiche (17, 18) mit dem Schellenband (2) stoffschlüssig verbunden, insbesondere verschweißt sind.

3. Schelle nach Anspruch 1 oder 2, **dadurch gekennzeichnet, dass** der teilkreisförmige Bereich (16) radial innerhalb des Schellenbandes (2) und axial gegenüber dem Schellenband (2) versetzt ist, wobei der Befestigungsbereich (17, 18) einen in einer Ebene mit dem teilkreisförmigen Bereich (16) liegenden Radialabschnitt (19, 20) und einen axial verlaufenden Axialabschnitt (21, 22) umfasst.

4. Schelle nach Anspruch 3, **dadurch gekennzeichnet, dass** der Radialabschnitt (19, 20) gegenüber dem teilkreisförmigen Bereich (16) um mehr als 90° nach außen umgebogen ist.

5. Schelle nach Anspruch 3 oder 4, **dadurch gekennzeichnet, dass** der Axialabschnitt (21, 22) breiter ist als der Radialabschnitt (19, 20).

6. Schelle nach einem der vorhergehenden Ansprüche, **dadurch gekennzeichnet, dass** der Vorpositionierer (3), insbesondere der teilkreisförmige Bereich (16) und die Radialabschnitte (19, 20), federelastisch verformbar ist.

7. Schelle nach einem der vorhergehenden Ansprüche, **dadurch gekennzeichnet, dass** die Schelle (1) als Spannschelle ausgebildet ist, wobei an Enden (7 ,8) des Schellenbandes (2) jeweils eine Spannbacke (9, 10) ausgebildet ist, die über ein Spannmittel (11) miteinander verbunden sind.

8. Schelle nach einem der vorhergehenden Ansprüche, **dadurch gekennzeichnet, dass** die Schelle (1) als Profilschelle ausgebildet ist und das Schellenband (2) zwei radial nach innen geneigte Flanken (4, 5) aufweist.

9. Schelle nach einem der vorhergehenden Ansprüche, **dadurch gekennzeichnet, dass** ein offener Winkelbereich des Trägerbandes bei ungespannter Schelle (1) zwischen 45° und 90° beträgt.

10. Schelle nach Anspruch 9, **dadurch gekennzeichnet, dass** der offene Winkelbereich des Trägerbandes (23) in Umfangsrichtung gegenüber einem zwischen den Spannbacken (9, 10) ausgebildeten Spannbereichs des Schellenbandes (2) versetzt ist.

11. Schelle nach einem der vorhergehenden Ansprüche, **dadurch gekennzeichnet, dass** die Befestigungsbereiche (17, 18) in Umfangsrichtung um weniger als 180° versetzt zueinander am Schellenband (2) befestigt sind.

## Claims

1. Clamp having a clamp band (2) and a prepositioner (3), the prepositioner (3) being designed as a carrier band (23) which has a part-circular region (16), the carrier band (23) having a fastening region (17, 18) at each of its ends, the fastening region being angled with respect to the part-circular region, **characterized in that** the fastening regions (17, 18) are fastened to a same flank or a same circumferential side of the clamp band (2).

2. Clamp according to claim 1, **characterized in that** the fastening regions (17, 18) are connected to the clamp band (2) by material bonding, in particular welding.

3. Clamp according to claim 1 or 2, **characterized in that** the part-circular region (16) is radially offset within the clamp band (2) and axially offset relative to the clamp band (2), the fastening region (17, 18) comprising a radial section (19, 20) lying in a plane with the part-circular region (16) and an axially extending axial section (21, 22).

4. Clamp according to claim 3, **characterized in that** the radial section (19, 20) is bent outwards by more than 90° relative to the part-circular region (16).

5. Clamp according to claim 3 or 4, **characterized in that** the axial section (21, 22) is wider than the radial section (19, 20).

6. Clamp according to one of the preceding claims, **characterized in that** the prepositioner (3), in particular the part-circular region (16) and the radial sections (19, 20), is resiliently deformable.

7. Clamp according to one of the preceding claims, **characterized in that** the clamp (1) is designed as a tensioning clamp, wherein a respective tensioning jaw (9, 10) is formed at ends (7, 8) of the clamp band (2), which jaws are connected to one another via a tensioning means (11).

8. Clamp according to one of the preceding claims, **characterized in that** the clamp (1) is designed as a profiled clamp and the clamp band (2) has two radially inwardly inclined flanks (4, 5).

9. Clamp according to one of the preceding claims, **characterized in that** an open angular region of the carrier band comprises an opening angle between 45° and 90° when the clamp (1) is untensioned.

10. Clamp according to claim 9, **characterized in that** the open angular region of the carrier band (23) is offset in the circumferential direction relative to a clamping region of the clamp band (2) formed between the clamping jaws (9, 10).

11. Clamp according to one of the preceding claims, **characterized in that** the fastening regions (17, 18) are fastened to the clamp band (2) offset from each other by less than 180° in the circumferential direction.

## Revendications

1. Collier de serrage avec une bande de serrage (2) et un dispositif de prépositionnement (3), le dispositif de prépositionnement (3) étant réalisé sous la forme d'une bande de support (23) qui présente une zone (16) de forme partiellement circulaire, la bande de support (23) présentant à chacune de ses extrémités une zone de fixation (17, 18) qui est coudée par rapport à la zone de forme partiellement circulaire, **caractérisé en ce que** les zones de fixation (17, 18) sont fixées sur un même flanc ou un même côté périphérique de la bande de serrage (2).

2. Collier de serrage selon la revendication 1, **caractérisé en ce que** les zones de fixation (17, 18) sont reliées à la bande de serrage (2) par une liaison matérielle, en particulier les zones de fixation sont soudées à la bande de serrage.

3. Collier de serrage selon la revendication 1 ou 2, **caractérisé en ce que** la zone partiellement circulaire (16) est décalée radialement à l'intérieur de la bande de serrage (2) et axialement par rapport à la bande de serrage (2), la zone de fixation (17, 18) comprenant une section radiale (19, 20) située dans un plan avec la zone partiellement circulaire (16) et une section axiale (21, 22) s'étendant axialement.

4. Collier de serrage selon la revendication 3, **caractérisée en ce que** la section radiale (19, 20) est recourbée vers l'extérieur de plus de 90° par rapport à la zone partiellement circulaire (16).

5. Collier de serrage selon la revendication 3 ou 4, **caractérisée en ce que** la section axiale (21, 22) est plus large que la section radiale (19, 20).

6. Collier de serrage selon l'une des revendications précédentes, **caractérisée en ce que** le prépositionneur (3), en particulier la zone partiellement circulaire (16) et les sections radiales (19, 20), est élastiquement déformable.

7. Collier de serrage selon l'une des revendications précédentes, **caractérisée en ce que** le collier de serrage (1) est conçue comme un collier de tension, dans lequelle une mâchoire de tension respective (9, 10) est formée aux extrémités (7 ,8) de la bande de serrage (2), lesquelles mâchoires sont reliées entre elles par un moyen de tension (11).

8. Collier de serrage selon l'une des revendications précédentes, **caractérisée en ce que** le collier de serrage (1) est conçue comme un collier profilée et la bande de serrage (2) présente deux flancs (4, 5) inclinés radialement vers l'intérieur.

9. Collier de serrage selon l'une des revendications précédentes, **caractérisée en ce qu'**une plage angulaire ouverte de la bande de support est comprise entre 45° et 90° lorsque le collier der serrage (1) est détendue.

10. Collier de serrage selon la revendication 9, **caractérisée en ce que** la zone angulaire ouverte de la bande de support (23) est décalée dans la direction circonférentielle par rapport à une zone de serrage de la bande de serrage (2) formée entre les mâchoires de serrage (9, 10).

11. Collier de serrage selon l'une des revendications précédentes, **caractérisée en ce que** les zones de fixation (17, 18) sont fixées sur la bande de serrage (2) décalées l'une par rapport à l'autre de moins de 180° dans la direction circonférentielle.
